# EUROPÄISCHE PATENTSCHRIFT

(11) **EP 3 455 524 B1**
(45) Veröffentlichungstag und Bekanntmachung des Hinweises auf die Patenterteilung: **09.06.2021**
(21) Anmeldenummer: 17722671.9
(22) Anmeldetag: 20.04.2017
(51) Int. Cl.: F16H 61/28, F16H 63/24, F16H 63/30, F16H 3/08

(54) **VORRICHTUNG UND VERFAHREN ZUM KUPPELN, SCHALTEN UND/ODER SYNCHRONISIEREN IN EINEM GETRIEBE**
DEVICE AND METHOD FOR COUPLING, SHIFTING AND/OR SYNCHRONIZING IN A TRANSMISSION
DISPOSITIF ET PROCÉDÉ D'EMBRAYAGE, DE CHANGEMENT DE VITESSE ET/OU DE SYNCHRONISATION DANS UNE TRANSMISSION

(30) Priorität: 09.05.2016 DE 102016207862
(43) Veröffentlichungstag der Anmeldung: 20.03.2019
(73) Patentinhaber: Schaeffler Technologies AG & Co. KG, 91074 Herzogenaurach (DE)
(72) Erfinder: FRIEDMANN, Oswald, 77839 Lichtenau (DE); HANS, Dominik, 76461 Muggensturm (DE)
(86) Internationale Anmeldenummer: PCT/DE2017/100316
(87) Internationale Veröffentlichungsnummer: WO 2017/194048

(56) Entgegenhaltungen:
- DE-A1-102006 015 688
- DE-A1-102012 013 375
- DE-A1-102014 206 493

## Beschreibung

Die Erfindung betrifft eine Vorrichtung und ein Verfahren zum Kuppeln, Schalten und/oder Synchronisieren in einem Getriebe mit Radpaaren, die zur Darstellung von Gängen in dem Getriebe jeweils ein Festrad und ein Losrad umfassen, das drehbar auf einer Getriebewelle angeordnet ist, und mit einer Kopplungseinrichtung.

Aus der deutschen Patentschrift DE 199 82 494 C1 ist eine Synchronisiereinrichtung für ein Schaltgetriebe mit einem auf einer Getriebewelle in Umfangsrichtung der Getriebewelle verdrehfest angeordneten Synchronkörper bekannt, auf dem eine Schiebemuffe entlang der Längsmittelachse der Getriebewelle verschiebbar angeordnet ist, wobei ein auf der Getriebewelle drehbar gelagertes und an den Synchronkörper anschließendes Gangrad mit einem Kupplungskörper verbunden oder mit einer Kupplungsverzahnung versehen ist, das über den Kupplungskörper oder die Kupplungsverzahnung mittels der Schiebemuffe mit dem Synchronkörper kuppelbar ist. Aus der deutschen Offenlegungsschrift DE 10 2007 037 535 A1 ist eine Synchronisiereinrichtung eines Zahnräderwechselgetriebes bekannt, mit der mindestens ein Losrad relativ zu einer Welle wahlweise drehbar gehalten oder drehfest gelegt werden kann, wobei die Synchronisiereinrichtung zur Drehzahlangleichung und Drehmomentübertragung zwischen Losrad und Welle eine auf der Welle axial verschiebliche, jedoch drehfest gelegte Schiebemuffe umfasst, wobei an mindestens einer Stirnseite der Schiebemuffe und der der Schiebemuffe zugewandten Stirnseite des Losrads Profilierungen angebracht sind, die sich jeweils komplementär ergänzen.

Aus der DE 10 2014 206 493 A1 ist eine Schaltvorrichtung bekannt, bei welcher ein Planetengetriebe vorgesehen ist, dass so mit einer Schiebemuffe zusammenwirkt, dass eine Betätigung des Planetengetriebes in einer schaltenden Bewegung der Schiebemuffe resultiert. Das Planetengetriebe ist radial außerhalb des Bereiches zwischen den Losrädern eines Getriebes angeordnet und seine Drehachse ist 90° zur Welle der Losräder gekippt.

Aufgabe der Erfindung ist es, das Kuppeln, Schalten und/oder Synchronisieren in einem Getriebe mit Radpaaren, die zur Darstellung von Gängen in dem Getriebe jeweils ein Festrad und ein Losrad umfassen, das drehbar auf einer Getriebewelle angeordnet ist, und mit einer Kopplungseinrichtung, zu vereinfachen.

Die Aufgabe ist bei einer gattungsgemäßen Vorrichtung zum Kuppeln, Schalten und/oder Synchronisieren in einem Getriebe mit Radpaaren, die zur Darstellung von Gängen in dem Getriebe jeweils ein Festrad und ein Losrad umfassen, das drehbar auf einer Getriebewelle angeordnet ist, und mit einer Kopplungseinrichtung, welches ein Planetengetriebe umfasst, das zwei auf einer Getriebewelle benachbarten Losrädern des Getriebes zugeordnet ist, durch die Merkmale des kennzeichnenden Teils des Anspruchs 1 gelöst.

Weitere Ausgestaltungen sind in den Unteransprüchen beschrieben.

Durch das Planetengetriebe kann der axiale Bauraum, der für die Kopplungseinrichtung in dem Getriebe benötigt wird, reduziert werden. So können zum Beispiel Planetengetriebeelemente radial innerhalb von Verzahnungen der Losräder platziert werden. Darüber hinaus können die Planetengetriebeelemente zwischen den beiden benachbarten Losrädern radial verschachtelt werden. Dadurch kann der für das Getriebe benötigte axiale Bauraum verringert werden. Die Kopplungseinrichtung ist vorzugsweise eine Synchronisiereinrichtung. Die Kopplungseinrichtung kann aber auch eine Kupplungs- und/oder Schalteinrichtung sein. Die Kopplungseinrichtung ist zum Beispiel eine Schiebemuffe, die über das Planetengetriebe betätigt wird.

Die erfinderische Vorrichtung ist dadurch gekennzeichnet, dass das Planetengetriebe zwei Planetengetriebeelemente umfasst, die so mit den Losrädern gekoppelt sind, das sich ein erstes Planetengetriebeelement/zweites Planetengetriebeelement im Wesentlichen synchron mit einem ersten Losrad/zweiten Losrad dreht. Der Begriff im Wesentlichen synchron bedeutet in diesem Zusammenhang auch, dass sich die Planetengetriebeelemente nach einem Betätigen der Kopplungseinrichtung in einem begrenzten Umfang relativ zu den Losrädern verdrehen können, um einen Kupplungs-, Schalt- und oder Synchronisiervorgang auszulösen. Das erste Planetengetriebeelement ist dem ersten Losrad zugeordnet und dreht sich synchron zu dem ersten Losrad, solange die Kopplungseinrichtung nicht betätigt ist. Beim Betätigen der Kopplungseinrichtung wird das erste Planetengetriebeelement über das Planetengetriebe relativ zu dem ersten Losrad verdreht. Diese Relativverdrehung wird dann in eine axiale Bewegung von mindestens einem Kopplungselement der Kopplungseinrichtung umgewandelt, um eine Kopplung, insbesondere einen Formschluss, zwischen dem ersten Losrad und der Getriebewelle zu bewirken. Analog kann das zweite Planetengetriebeelement, das dem zweiten Losrad zugeordnet ist, über das Planetengetriebe relativ zu dem zweiten Losrad verdreht werden, um eine Kopplung, insbesondere eine Synchronisierung, zwischen dem zweiten Losrad und der Getriebewelle zu bewirken. Die Kopplung oder Synchronisierung wird also, im Unterschied zu herkömmlichen Kopplungseinrichtungen, durch Relativverdrehungen zwischen den ersten beiden Planetengetriebeelementen des Planetengetriebes und den jeweils zugeordneten Losrädern ausgelöst.

Ein weiteres bevorzugtes Ausführungsbeispiel der Vorrichtung ist dadurch gekennzeichnet, dass das Planetengetriebe ein drittes Planetengetriebeelement umfasst, das in einem unbetätigten Zustand der Kopplungseinrichtung relativ zu den ersten beiden Planetengetriebeelementen feststeht. Feststeht bedeutet im Hinblick auf das dritte Planetengetriebeelement, dass das dritte Planetengetriebeelement im unbetätigten Zustand der Kopplungseinrichtung nicht rotiert. Zu diesem Zweck kann das dritte Planetengetriebeelement im unbetätigten Zustand der Kopplungseinrichtung gehäusefest, zum Beispiel an einem Getriebegehäuse, festgelegt werden. Je nach Ausführung des Planetengetriebes handelt es sich bei den ersten beiden Planetengetriebeelementen zum Beispiel um ein Sonnenrad und einen Planetenträger. Dann handelt es sich bei dem dritten Getriebeelement zum Beispiel um ein Hohlrad des Planetengetriebes. Das Hohlrad steht dann im unbetätigten Zustand der Kopplungseinrichtung still. Das Planetengetriebe umfasst darüber hinaus Planetenräder. Dabei kann das Planetengetriebe als einfaches Planetengetriebe oder als Stufenplanetengetriebe ausgeführt sein. Die beiden ersten Planetengetriebeelemente können auch als Sonnenräder oder Zentralräder ausgeführt sein. Dann ist das erste Planetengetriebeelement zum Beispiel ersten Umlaufrädern oder Planetenrädern des als Stufenplanet ausgeführten Planetengetriebes zugeordnet. Das zweite Sonnenrad oder Zentralrad ist bei dieser Ausführung vorteilhaft zweiten Umlaufrädern oder Planetenrädern des als Stufenplanet ausgeführten Planetengetriebes zugeordnet. Die ersten und zweiten Umlaufräder oder Planetenräder sind auf einer gemeinsamen Achse angeordnet und einem Steg des Planetengetriebes zugeordnet. Der Steg steht im unbetätigten Zustand der Kopplungseinrichtung still.

Ein weiteres bevorzugtes Ausführungsbeispiel der Vorrichtung ist dadurch gekennzeichnet, dass das dritte Planetengetriebeelement so aus seinem unbetätigten Zustand schwenkbar ist, dass die ersten beiden Planetengetriebeelemente relativ zu dem jeweils zugeordneten Losrad abgebremst oder beschleunigt werden. Die Relativgeschwindigkeiten zwischen den ersten beiden Planetengetriebeelementen und den zugeordneten Losrädern werden beim Betätigen der Kopplungseinrichtung über geeignete Kopplungselemente oder Kopplungseinrichtungen genutzt, um das jeweilige Losrad drehfest mit der Getriebewelle zu verbinden, vorzugsweise durch Formschluss. Beim Verschwenken wird das dritte Planetengetriebeelement vorzugsweise um eine Schwenkachse verschwenkt, die koaxial beziehungsweise parallel zu der Drehachse der Getriebewelle angeordnet ist oder mit der Drehachse der Getriebewelle zusammenfällt.

Erfindungsgemäß ist die Vorrichtung weiterhin dadurch gekennzeichnet, dass die ersten beiden Planetengetriebeelemente so mit den zugeordneten Losrädern gekoppelt sind, dass Relativgeschwindigkeiten zwischen den ersten beiden Planetengetriebeelementen und den zugeordneten Losrädern einen Kopplungsvorgang oder einen Synchronisierungsvorgang auslösen und das Einlegen eines Ganges in dem Getriebe bewirken. Durch den Kopplungsvorgang oder Synchronisiervorgang wird das jeweilige Losrad, das sich mit einem Festrad des jeweiligen Radpaares des Getriebes in Eingriff befindet, drehfest, zum Beispiel durch Formschluss, mit der Getriebewelle verbunden, um den Gang in dem Getriebe, der mit dem Radpaar dargestellt wird, einzulegen. Bei dem Getriebe handelt es sich zum Beispiel um ein manuelles Schaltgetriebe. Das Getriebe kann aber auch ein Doppelkupplungsgetriebe mit zwei Teilgetrieben und einer Doppelkupplung sein.

Ein weiteres bevorzugtes Ausführungsbeispiel der Vorrichtung ist dadurch gekennzeichnet, dass zwischen den ersten beiden Planetengetriebeelementen und den zugeordneten Losrädern jeweils ein Anschlag vorgesehen ist, wobei die beiden Anschläge gleiche Wirkrichtungen aufweisen. Bei einer Relativverdrehung zwischen einem der beiden Planetengetriebeelemente und zum zugeordneten Losrad bewegt sich der zugehörige Anschlag. Diese Bewegung des Anschlags kann vorteilhaft verwendet werden, um die Kopplung oder Synchronisierung zu bewirken.

Ein weiteres bevorzugtes Ausführungsbeispiel der Vorrichtung ist dadurch gekennzeichnet, dass eines der ersten beiden Planetengetriebeelemente drehfest mit dem zugehörigen Losrad verbunden ist. Das andere der beiden Planetengetriebeelemente ist dann vorteilhaft ohne Anschlag ausgeführt. Das heißt, ein entsprechender Anschlagkörper an einem der ersten beiden Planetengetriebeelemente kann sich relativ zu dem zugeordneten Losrad in unterschiedliche Richtungen bewegen, um zum Beispiel entweder einen ersten oder einen zweiten Gang einzulegen.

Ein weiteres bevorzugtes Ausführungsbeispiel der Vorrichtung ist dadurch gekennzeichnet, dass die ersten beiden Planetengetriebeelemente so miteinander gekoppelt sind, dass eine Verdrehung relativ zu den Losrädern nur gleichzeitig erfolgen kann. Dann können die ersten beiden Planetengetriebeelemente ohne Anschläge ausgeführt sein. Das bedeutet, dass an den ersten beiden Planetengetriebeelementen Anschlagkörper angebracht sein können, die sich beim Betätigen der Kopplungseinrichtung in entgegengesetzte Richtungen bewegen können. Bei dieser Ausführung ist den beiden ersten Planetengetriebeelementen vorzugsweise ein gemeinsames Koppelelement zugeordnet, das axial bewegbar ist, um zum Beispiel den ersten oder zweiten Gang einzulegen.

Ein weiteres bevorzugtes Ausführungsbeispiel der Vorrichtung ist dadurch gekennzeichnet, dass das Planetengetriebe koaxial zu der Getriebewelle angeordnet ist. Die zentrale Drehachse des Planetengetriebes fällt vorteilhaft mit der Drehachse der Getriebewelle zusammen. Bei der zentralen Drehachse des Planetengetriebes handelt es sich zum Beispiel um die Drehachse von mindestens einem Sonnenrad oder Zentralrad oder eines Planetenträgers beziehungsweise Steg des Planetengetriebes.

Bei einem Verfahren zum Kuppeln, Schalten oder Synchronisieren in einem Getriebe mit einer vorab beschriebenen Vorrichtung ist die oben angegebene Aufgabe alternativ oder zusätzlich dadurch gelöst, dass die Betätigung der Kopplungseinrichtung über das Planetengetriebe durch eine schwenkende Bewegung erfolgt. Die schwenkende Bewegung erfolgt, vorzugsweise durch das dritte Planetengetriebeelement, um die Drehachse der Getriebewelle, auf der die beiden Losräder angeordnet sind, denen das Planetengetriebe zugeordnet ist.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
Figur 1 eine vereinfachte Darstellung eines Getriebes mit vier Radpaaren und zwei Synchronisiereinrichtungen, die jeweils ein Planetengetriebe umfassen; und die
Figuren 2 bis 4 jeweils eine vereinfachte Darstellung eines Getriebes mit zwei Radpaaren, denen eine Synchronisiereinrichtung zugeordnet ist, die ein in drei unterschiedlichen Ausführungsformen dargestelltes Planetengetriebe umfasst; und die
Figuren 5 bis 7 drei Ausführungsbeispiele zu Figur 4 mit Blick auf erste Planetengetriebeelemente, die zwischen zwei nur angedeuteten Losrädern angeordnet sind.

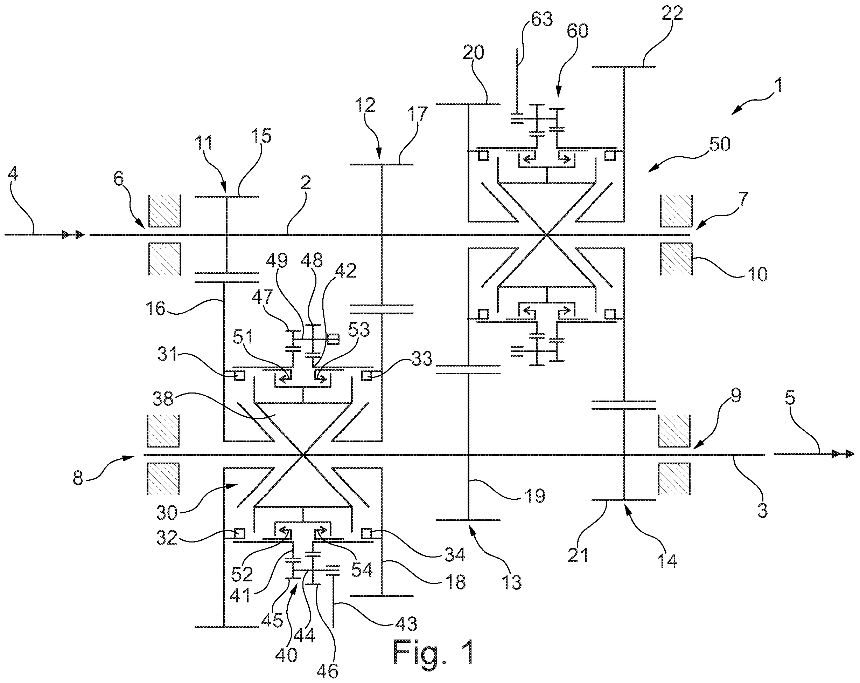

In Figur 1 ist ein Getriebe 1 mit zwei Getriebewellen 2, 3 vereinfacht dargestellt. Die Getriebewellen 2, 3 sind parallel zueinander angeordnet. Durch einen Pfeil 4 ist angedeutet, dass ein Drehmoment über die Getriebewelle 2 in das Getriebe 1 eingeleitet wird. Daher wir die Getriebewelle 2 auch als Getriebeeingangswelle bezeichnet. Durch einen Pfeil 5 ist angedeutet, dass ein Drehmoment über die Getriebewelle 3 von dem Getriebe 1 abgegeben wird. Daher wird die Getriebewelle 3 auch als Getriebeausgangswelle bezeichnet.

Die Getriebewelle oder Getriebeeingangswelle 2 ist an zwei Lagerstellen 6, 7 um eine Drehachse drehbar gelagert. Die Getriebewelle oder Getriebeausgangswelle 3 ist an zwei Lagerstellen 8, 9 parallel zu der Getriebewelle 2 um eine Drehachse drehbar gelagert.

Das Getriebe 1 umfasst ein nur durch Schraffuren an den Lagerstellen 6 bis 9 angedeutetes Getriebegehäuse 10. Das Getriebe 1 mit dem Getriebegehäuse 10 ist zum Beispiel im Antriebsstrang eines (nicht dargestellten) Kraftfahrzeugs angeordnet. Das Getriebegehäuse 10 mit den Lagerstellen 6 bis 9 ist im Wesentlichen fest an einer Tragstruktur des Kraftfahrzeugs angebracht.

Das Getriebe 1 umfasst insgesamt vier Radpaare 11 bis 14. Die Radpaare 11 bis 14 umfassen jeweils zwei Zahnräder, die paarweise auf den Getriebewellen 2, 3 angeordnet sind. Dabei ist eines der Zahnräder der Radpaare 11 bis 14 fest mit der Getriebewelle 2, 3 verbunden. Diese Zahnräder werden auch als Festräder 15, 17, 19, 21 bezeichnet.
Die jeweils zweiten Zahnräder der Radpaare 11 bis 14 sind zum Beispiel über Wälzlager drehbar auf der jeweils zweiten Getriebewelle 2, 3 gelagert. Daher werden diese Zahnräder auch als Losräder 16, 18, 20, 22 bezeichnet. Festrad 15, 17, 19, 21 und Losrad 16, 18, 20, 22 eines Zahnradpaars 11 bis 14 kämmen miteinander und bilden so einen Gang mit einer festen Übersetzung. Soll ein Gang eingelegt werden, so muss das Losrad 16, 18, 20, 22 mit der zugeordneten Getriebewelle 2, 3 gekoppelt werden.

Die Kopplung wird über eine Synchronisiereinrichtung 30; 50 eingeleitet. Eine drehfeste Verbindung zwischen dem Losrad 16; 18 und der Getriebeausgangswelle 3 wird über Formschlusskupplungen 31, 32; 33, 34 realisiert. Die Formschlusskupplungen 31 bis 34 sind über eine Kopplungseinrichtung 38 mit der Getriebeeingangswelle 3 koppelbar.

Eine Auslösung beziehungsweise Betätigung der Formschlusskupplungen 31 bis 34 erfolgt über ein Planetengetriebe 40. Das Planetengetriebe 40 ist in Figur 1 zusammen mit der Kopplungseinrichtung 38 in axialer Richtung zwischen den beiden Losrädern 16, 18 angeordnet.

Dabei ist das Planetengetriebe 40 vorteilhaft besonders platzsparend teilweise radial innerhalb von Verzahnungen der Losräder 16, 18 angeordnet. Dadurch kann der für die Synchronisiereinrichtung 30 mit dem Planetengetriebe 40 benötigte Bauraum in axialer Richtung wirksam reduziert werden.

Die beiden Losräder 16, 18 sind drehbar auf der Getriebeausgangswelle 3 angeordnet und über die Formschlusskupplungen 31 bis 34, das Planetengetriebe 40 und die Kopplungseinrichtung 38 drehfest mit der Getriebeausgangswelle 3 verbindbar. Die zugehörigen Festräder 15, 17 sind drehfest mit der Getriebeeingangswelle 2 verbunden.

Figur 1 zeigt schematisch den Aufbau des Planetengetriebes 40. Das Planetengetriebe 40 umfasst ein erstes Planetengetriebeelement 41, das als Sonne oder Zentralrad ausgeführt und dem Losrad 16 zugeordnet ist. Ein zweites Planetengetriebeelement 42 ist als weitere Sonne oder weiteres Zentralrad ausgeführt und dem Losrad 18 zugeordnet. Ein drittes Planetengetriebeelement 43 ist als Steg des Planetengetriebes 40 ausgeführt.

Das Planetengetriebe 40 umfasst des Weiteren ein erstes und ein zweites Planetenrad 45, 46 sowie ein drittes und viertes Planetenrad 47, 48. Das erste und zweite Planetenrad 45, 46 ist drehfest mit einer gemeinsamen Achse 44 verbunden. Das dritte und vierte Planetenrad 47, 48 ist ebenfalls drehfest mit einer gemeinsamen Achse 49 verbunden. Die gemeinsamen Achsen 44 und 49 sind über den Steg 43 betätigbar. Das erste Planetenrad 45 und das dritte Planetenrad 47 kämmen mit dem als Sonne oder Zentralrad ausgeführten ersten Planetengetriebeelement 41.

Die Übersetzung des Planetengetriebes 40 ist so gewählt, dass zum einen ein Teil des Planetengetriebes 40 - eine Sonne, der Steg oder ein Hohlrad - mit derselben Drehzahl dreht wie das erste Losrad 16. Zum anderen dreht sich ein anderes Teil des Planetengetriebes 40 mit der Drehzahl des zweiten Losrads 18. Ein drittes Teil des Planetengetriebes 40 steht relativ zu dem Getriebegehäuse 10 still.

In Figur 1 dreht sich das erste Planetengetriebeelement 41 mit derselben Drehzahl wie das Losrad 16. Das zweite Planetengetriebeelement 42 dreht sich mit derselben Drehzahl wie das Losrad 18. Das dritte Planetengetriebeelement 43 steht im unbetätigten Zustand der Synchronisiereinrichtung 30 still.

Zum Betätigen der Synchronisiereinrichtung 30 wird das dritte Planetengetriebeelement 43, also der Steg des Planetengetriebes 40, verschwenkt. Durch das Verschwenken des dritten Planetengetriebes 43 werden die ersten Planetengetriebeelemente 41, 42 beschleunigt oder abgebremst. Das führt zu einer Relativgeschwindigkeit zu dem jeweiligen Losrad 16, 18. Durch die Relativgeschwindigkeit beziehungsweise Relativbewegung wird die Synchronisierung betätigt und ein Gang eingelegt, wie in Figur 1 durch Pfeile 51 bis 54 angedeutet ist.

Die Synchronisiereinrichtung 50 ist entsprechend mit einem Planetengetriebe 60 ausgeführt und zwischen den beiden Losrädern 20, 22 auf der Getriebeeingangswelle 2 angeordnet. Die Synchronisiereinrichtung 50 mit dem Planetengetriebe 60 wird über einen Steg 63 ebenfalls durch Verschwenken betätigt.

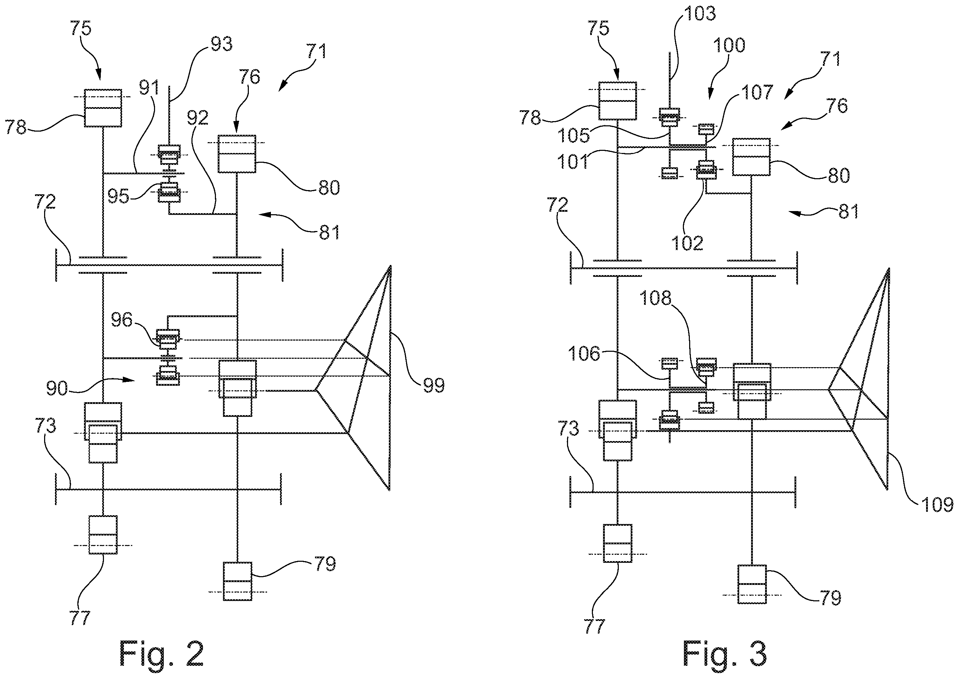

In den Figuren 2 bis 4 ist ein Getriebe 71 mit drei unterschiedlichen Ausführungen von Planetengetrieben 90; 100; 110 dargestellt. Das Getriebe 71 ist in den Figuren 2 bis 4 gleich ausgeführt und ist daher mit den gleichen Bezugszeichen versehen. Zur Vereinfachung werden im Folgenden zunächst die Gemeinsamkeiten des Getriebes 71 in den Figuren 2 bis 4 beschrieben. Danach wird auf die unterschiedlichen Ausführungen des Planetengetriebes 90; 100; 110 in den Figuren 2 bis 4 eingegangen.

Das Getriebe 71 umfasst eine Getriebewelle 72 und eine Getriebewelle 73. Die beiden Getriebewellen 72, 73 sind parallel zueinander angeordnet. Darüber hinaus umfasst das Getriebe 71 zwei Radpaare 75, 76, die als Zahnradpaare ausgeführt sind. Das Radpaar 75 umfasst ein Festrad 77, das drehfest mit der Getriebewelle 73 verbunden ist, und ein Losrad 78, das drehbar auf der Getriebewelle 72 angeordnet ist. Das Radpaar 76 umfasst ein Festrad 79, das drehfest mit der Getriebewelle 73 verbunden ist, und ein Losrad 80, das drehbar auf der Getriebewelle 72 angeordnet ist.

Eine Synchronisiereinrichtung 81 ist so oder so ähnlich ausgeführt wie die Synchronisiereinrichtung 30 in Figur 1. In den Figuren 2 bis 4 sind die Formschlusskupplungen 31 bis 34 und die Kopplungseinrichtung 38 aus Gründen der Übersichtlichkeit nicht dargestellt. Aber die Synchronisiereinrichtung 81 mit den Planetengetrieben 90; 100; 110 funktioniert in der gleichen Art und Weise wie die Synchronisiereinrichtung 30 in Figur 1.

Das Planetengetriebe 90; 100; 110 umfasst ein erstes Planetengetriebeelement 91; 101; 111, das im unbetätigten Zustand der Synchronisiereinrichtung 81 synchron mit dem Losrad 78 dreht, und ein zweites Planetengetriebeelement 92; 102; 112, das im unbetätigten Zustand der Synchronisiereinrichtung 81 synchron mit dem Losrad 80 dreht. Die Synchronisiereinrichtung 81 wird über ein drittes Planetengetriebeelement 93; 103; 113 betätigt.

Bei dem in Figur 2 dargestellten Planetengetriebe 90 ist das erste Planetengetriebeelement 91 als Planetenträger ausgeführt. Das zweite Planetengetriebeelement 92 ist als Sonnenrad ausgeführt. Das dritte Planetengetriebeelement 93 ist als Hohlrad ausgeführt. Auf dem Planetenträger 91 sind als Einfachplaneten ausgeführte Planetenräder 95, 96 drehbar gelagert.
In einem Kutzbachplan 99 sind Umfangsgeschwindigkeiten der einzelnen Planetengetriebeelemente 91 bis 93 und 95, 96 in x-Richtung dargestellt. In dem Kutzbachplan 99 sieht man, dass der Planetenträger 91 mit der gleichen Geschwindigkeit wie das Losrad 78 dreht. Darüber hinaus sieht man in dem Kutzbachplan 99, dass sich das Sonnenrad 92 des Planetengetriebes 90 mit der gleichen Geschwindigkeit dreht wie das Losrad 80. Letztendlich sieht man in dem Kutzbachplan 99 auch, dass das Hohlrad 93 des Planetengetriebes 90 keine Umfangsgeschwindigkeit hat und somit stillsteht.

Das in Figur 3 dargestellte Planetengetriebe 100 ist als Stufenplanetengetriebe ausgeführt. Das erste Planetengetriebeelement 101 ist, wie bei dem vorangegangenen Ausführungsbeispiel, als Planetenträger oder Steg ausgeführt. Das zweite Planetengetriebeelement 102 ist als Sonnenrad ausgeführt. Das dritte Planetengetriebeelement 103 ist als Hohlrad ausgeführt. Auf dem Planetenträger 101 sind als Stufenplaneten ausgeführte Planetenräder 105, 106 und 107, 108 drehbar gelagert. Die Ausführung der Planetenräder 105 bis 108 als Stufenplaneten ermöglicht eine größere Flexibilität in der Wahl der Zähnezahlen der Zahnräder der Radpaare 75, 76.

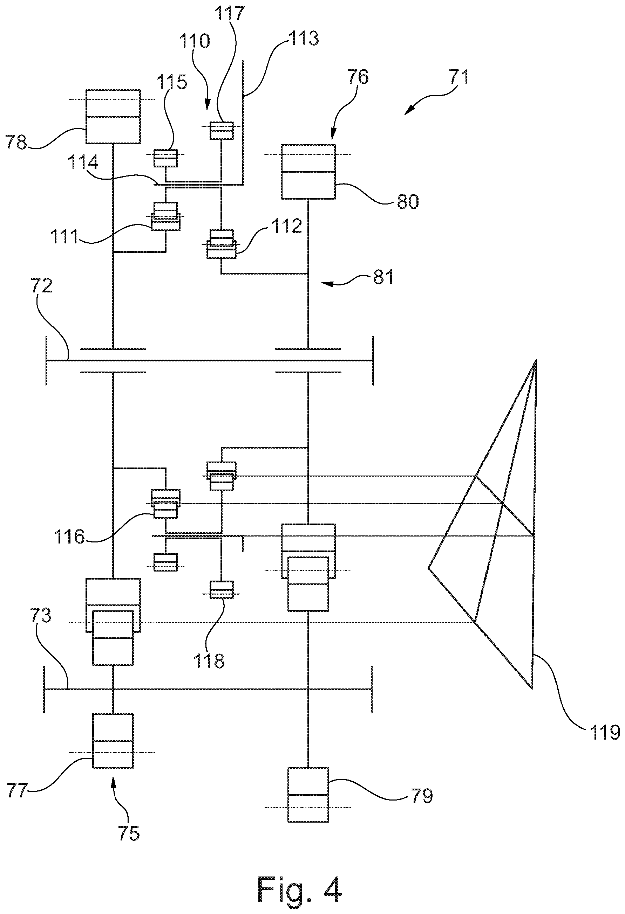

Bei dem in Figur 4 dargestellten Planetengetriebe 110 sind Planetenräder oder Umlaufräder 115, 116 und 117, 118 ebenfalls als Stufenplaneten ausgeführt. In Figur 4 ist das bei unbetätigter Synchronisiereinrichtung 81 stillstehende dritte Planetengetriebeelement 113 jedoch als Steg ausgeführt. Die ersten beiden Planetengetriebeelemente 111 und 112 sind als Sonnenräder oder Zentralräder ausgeführt. Die Anordnung der Figur 4 ist besonders günstig bei kleinen Unterschieden in den Übersetzungen der Gangradpaare 75 und 76.

In den Figuren 3 und 4 sind in Kutzbachplänen 109 und 119 die Umfangsgeschwindigkeiten der einzelnen Planetengetriebeelemente 101 bis 103; 111 bis 113 und 105 bis 108; 115 bis 118 jeweils in x-Richtung dargestellt. In Figur 4 sind die Stufenplaneten 115 bis 118 auf einer gemeinsamen Achse 114 drehbar gelagert. In Figur 4 erfolgt die Betätigung der Synchronisiereinrichtung 81 über das als Steg ausgeführte dritte Planetengetriebeelement 113.

Wird in den Figuren 2 bis 4 das stillstehende Planetengetriebeelement 93; 103; 113 des Planetengetriebes 90; 100; 110 relativ zum feststehenden Getriebegehäuse (10 in Figur 1) verdreht, dann muss sich auch mindestens eines der rotierenden Planetengetriebeelemente 91, 92; 101, 102; 111, 112 des Planetengetriebes 90; 100; 110 relativ zu dem gleich schnell drehenden Losrad 78, 80 verdrehen. Diese Relativverdrehung wird vorteilhaft genutzt, um die Synchronisiereinrichtung 81 zu betätigen und mittels einer (in den Figuren 2 bis 4 nicht dargestellten) Formschlusskupplung eines der Losräder 78, 80 der benachbarten Gangradpaare 75, 76 mit der entsprechenden Getriebewelle 72 zu verbinden.

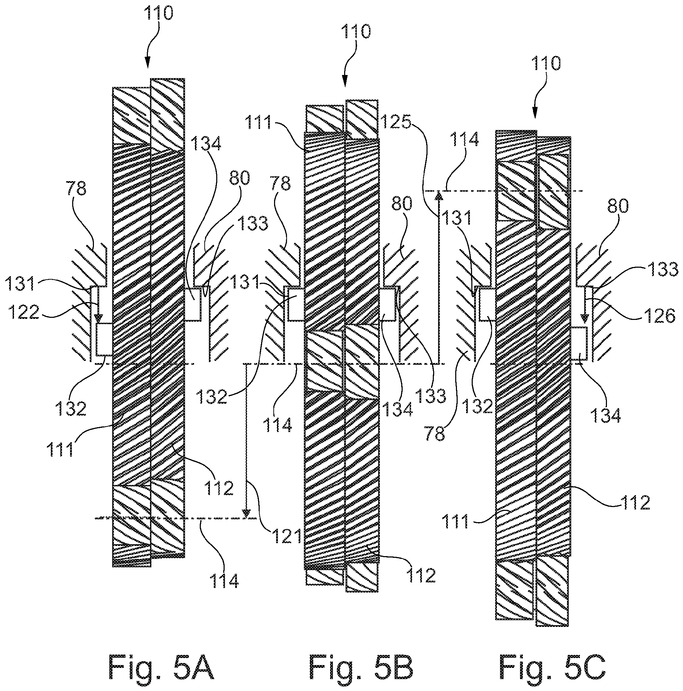

In den Figuren 5 bis 7 sind die Schwenkbewegung des stillstehenden dritten Planetengetriebeelements des Planetengetriebes 110 aus Figur 4 und die Bewegung der routierenden Planetengetriebeelemente veranschaulicht. Dabei zeigen die jeweils mittleren Figuren 5B, 6B, 7B das als Steg ausgeführte dritte Planetengetriebeelement in seiner Mittelstellung. Die linken Figuren 5A, 6A, 7A zeigen, was passiert, wenn das stillstehende Planetengetriebeelement nach unten geschwenkt wird. Analog zeigen die rechten Figuren 5C, 6C, 7C, was passiert, wenn das stillstehende Planetengetriebeelement nach oben geschwenkt wird.

Die Figuren 5 bis 7 beziehen sich auf das Planetengetriebe 110 aus Figur 4. Zur Bezeichnung gleicher Teile werden die gleichen Bezugszeichen verwendet.

In Figur 5 ist an dem Losrad 78 ein Anschlag 131 für einen Anschlagkörper 132 ausgebildet. Der Anschlagkörper 132 ist an dem ersten Planetengetriebeelement 111 angebracht. An dem Losrad 80 ist ein Anschlag 133 für einen Anschlagkörper 134 vorgesehen. Der Anschlagkörper 134 ist an dem zweiten Planetengetriebeelement 112 angebracht.

In Figur 5B befindet sich das als Steg ausgeführte dritte Planetengetriebeelement (113 in Figur 4) in seiner Mittelstellung. Die Anschlagkörper 132, 134 der beiden rotierenden Planetengetriebeelemente 111, 112 liegen an den Gegenflächen oder Anschlägen 131, 133 der gleich schnell rotierenden Losräder 78, 80 an.

Wird das als Steg ausgeführte stillstehende Planetengetriebeelement (113 in Figur 4) nach unten geschwenkt, so stellt sich der in Figur 5A dargestellte Zustand ein. Das rechte Sonnenrad 112 bleibt mit dem Anschlagkörper 134 am Anschlag 131 stehen. Das linke Sonnenrad 111 schwenkt, wie in Figur 5A durch einen Pfeil 122 angedeutet ist, nach unten. Durch einen Pfeil 121 ist in Figur 5A die Schwenkbewegung des stillstehenden Planetengetriebeelements angedeutet.

Wird das stillstehende Planetengetriebeelement, wie in Figur 5C durch einen Pfeil 125 angedeutet ist, nach oben geschwenkt, so stellt sich der in Figur 5C dargestellte Zustand ein. Das linke Sonnenrad 111 bleibt mit dem Anschlagkörper 132 am Anschlag 131 stehen. Das rechte Sonnenrad 112 schwenkt, wie durch einen Pfeil 126 angedeutet ist, von dem Anschlag 133 weg nach unten.

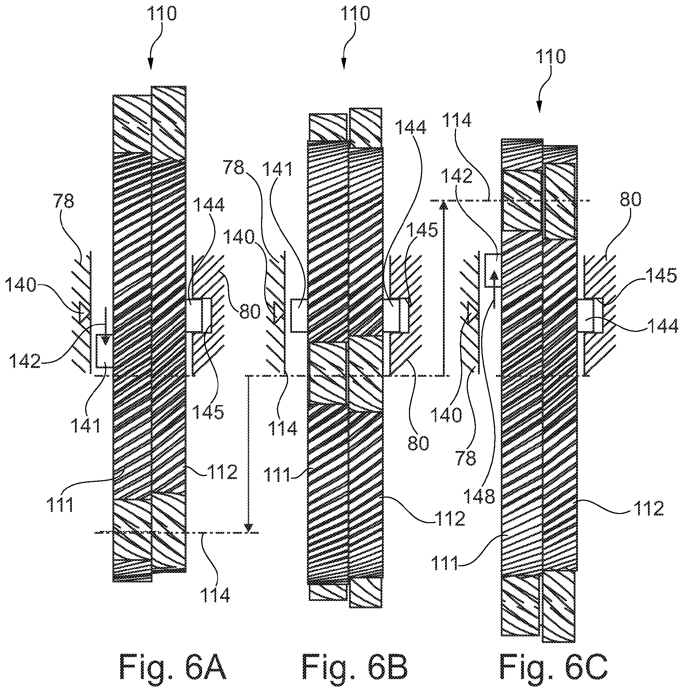

In Figur 6 ist eine alternative Ausführung der Planetengetriebeanordnung dargestellt. An dem linken Sonnenrad 111 ist ein Anschlagkörper 141 angebracht. An dem rechten Sonnenrad 112 ist ein Anschlagkörper 144 angebracht. Der Anschlagkörper 144 greift in eine Ausnehmung 145 ein. Dadurch wird das rechte Sonnenrad 112 drehfest mit dem Losrad 80 verbunden.

Durch eine Pfeilspitze 140 ist eine Grundstellung zwischen dem linken Sonnenrad 111 und dem Losrad 78 angedeutet. Ein Schwenken des stillstehenden Steges (113 in Figur 4) aus der in Figur 6B dargestellten Mittellage nach unten oder nach oben bewirkt eine schwenkende Relativverdrehung zwischen dem linken Sonnenrad 111 und dem linken Losrad 78.

Die schwenke Relativverdrehung nach unten ist in Figur 6A durch einen Pfeil 142 angedeutet. Die schwenkende Relativverdrehung nach oben ist in Figur 6C durch einen Pfeil 148 angedeutet. Beim Schwenken 142 nach unten wird dabei ein erster Gang eingelegt. Beim Schwenken 148 nach oben wird ein zweiter Gang eingelegt.

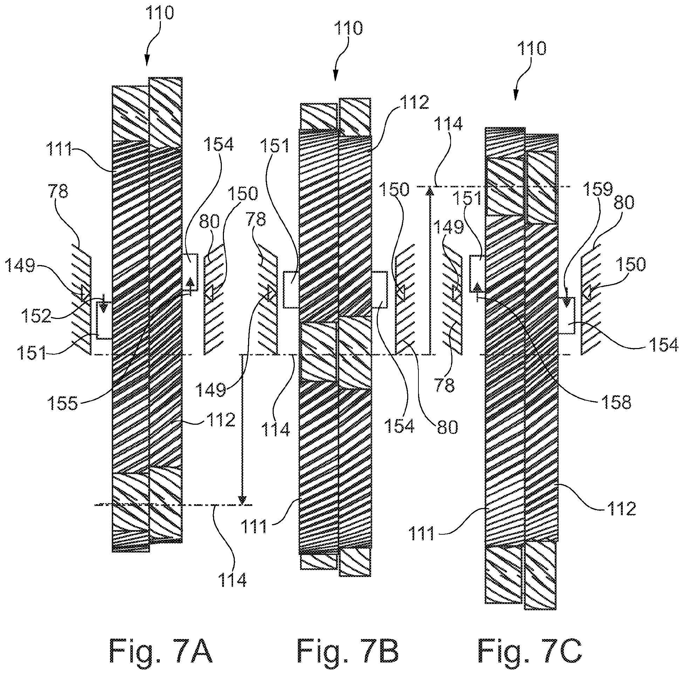

In Figur 7 ist eine weitere alternative Ausführung der Planetengetriebeanordnung dargestellt. An den Sonnenrädern 111, 112, die verkürzt auch als Sonnen bezeichnet werden, sind Anschlagkörper 151, 154 angebracht. Die Anschlagkörper 151 und 154 haben keine Anschläge oder Gegenflächen an den Losrädern 78, 80. Daher sind die Sonnenräder 111, 112 vorteilhaft so miteinander gekoppelt, dass eine Verdrehung gegenüber den Losrädern 78, 80 nur gleichzeitig erfolgen kann. Das wird zum Beispiel dadurch sichergestellt, dass beide Sonnenräder 111, 112 ein gemeinsames Koppelelement axial verschieben müssen (nicht dargestellt).

In den Figuren 7A bis 7C sind durch Pfeilspitzen 149, 150 Grundstellungen zwischen den Sonnenrädern 111, 112 und den Losrädern 78, 80 angedeutet. Bei einem in Figur 7A dargestellten Verschwenken des stillstehenden dritten Planetengetriebeelements nach unten wird ein erster Gang eingelegt, was durch Pfeile 152, 155 angedeutet ist.

Bei einem Verschwenken aus der in Figur 7B dargestellten Mittellage nach oben wird ein zweiter Gang eingelegt, wie in Figur 7C durch Pfeile 158, 159 angedeutet ist. Die Sonnenräder 111, 112 verdrehen sich dabei jeweils gegensinnig zu ihren sich gleich schnell drehenden Losrädern 78, 80.

### Bezuqszeichenliste

1 Getriebe
2 Getriebewelle
3 Getriebewelle
4 Pfeil
5 Pfeil
6 Lagerstelle
7 Lagerstelle
8 Lagerstelle
9 Lagerstelle
10 Getriebegehäuse
11 Radpaar
12 Radpaar
13 Radpaar
14 Radpaar
15 Festrad
16 Losrad
17 Festrad
18 Losrad
19 Festrad
20 Losrad
21 Festrad
22 Losrad
30 Synchronisiereinrichtung
31 Formschlusskupplung
32 Formschlusskupplung
33 Formschlusskupplung
34 Formschlusskupplung
38 Kopplungseinrichtung
40 Planetengetriebe
41 erstes Planetengetriebeelement
42 zweites Planetengetriebeelement
43 drittes Planetengetriebeelement
44 gemeinsame Achse
45 erstes Planetenrad
46 zweites Planetenrad
47 drittes Planetenrad
48 viertes Planetenrad
49 gemeinsame Achse
50 Synchronisiereinrichtung
51 Pfeil
52 Pfeil
53 Pfeil
54 Pfeil
60 Planetengetriebe
63 Steg
71 Getriebe
72 Getriebewelle
73 Getriebewelle
75 Radpaar
76 Radpaar
77 Festrad
78 Losrad
79 Festrad
80 Losrad
81 Synchronisiereinrichtung
90 Planetengetriebe
91 erstes Planetengetriebeelement
92 zweites Planetengetriebeelement
93 drittes Planetengetriebeelement
95 Planetenrad
96 Planetenrad
99 Kutzbachplan
100 Planetengetriebe
101 erstes Planetengetriebeelement
102 zweites Planetengetriebeelement
103 drittes Planetengetriebeelement
105 Planetenrad
106 Planetenrad
107 Planetenrad
108 Planetenrad
109 Kutzbachplan
110 Planetengetriebe
111 erstes Planetengetriebeelement
112 zweites Planetengetriebeelement
113 drittes Planetengetriebeelement
114 gemeinsame Achse
115 Planetenrad
116 Planetenrad
117 Planetenrad
118 Planetenrad
119 Kutzbachplan
121 Pfeil
122 Pfeil
125 Pfeil
126 Pfeil
131 Anschlag
132 Anschlagkörper
133 Anschlag
134 Anschlagkörper
140 Pfeilspitze
141 Anschlagkörper
142 Pfeil
144 Anschlagkörper
145 Ausnehmung
148 Pfeil
149 Pfeilspitze
150 Pfeilspitze
151 Anschlagkörper
152 Pfeil
154 Anschlagkörper
155 Pfeil
158 Pfeil
159 Pfeil

## Patentansprüche

1. Vorrichtung zum Kuppeln, Schalten und/oder Synchronisieren in einem Getriebe (1;71) mit Radpaaren (11-14;75,76), die zur Darstellung von Gängen in dem Getriebe (1;71) jeweils ein Festrad (15,17,19,21;77,79) und ein Losrad (16,18,20,22;78,80) umfassen, das drehbar auf einer Getriebewelle (8,7;72) angeordnet ist, und mit einer Kopplungseinrichtung (30;38;81), die ein Planetengetriebe (40,60;90;100;110) umfasst, das zwei auf einer Getriebewelle (8,7;72) benachbarten Losrädern (16,18,20,22;78,80) des Getriebes (1;71) zugeordnet ist, **dadurch gekennzeichnet, dass** das Planetengetriebe (40,60;90;100;110) zwei Planetengetriebeelemente (41,42;91,92;101,102;111,112) umfasst, die so mit den Losrädern (16,18,20,22;78,80) gekoppelt sind, dass sich ein erstes Planetengetriebeelement (41;91;101;111)/zweites Planetengetriebeelement (42;92;102;112) im Wesentlichen synchron mit einem ersten Losrad (16;78)/zweiten Losrad (18;80) dreht und die ersten beiden Planetengetriebeelemente (41;91;101;111;42;92;102;112) so mit den zugeordneten Losrädern (16,18,20,22;78,80) gekoppelt sind, dass Relativgeschwindigkeiten zwischen den ersten beiden Planetengetriebeelementen (41;91;101;111;42;92;102;112) und den zugeordneten Losrädern (16,18,20,22;78,80) einen Kopplungsvorgang oder Synchronisiervorgang auslösen und das Einlegen eines Ganges in dem Getriebe (8,7;72) bewirken.

2. Vorrichtung nach Anspruch 1, **dadurch gekennzeichnet, dass** das Planetengetriebe (40,60;90;100;110) ein drittes Planetengetriebeelement (47;93;103;113) umfasst, das in einem unbetätigten Zustand der Kopplungseinrichtung (30;38;81) zu den ersten beiden Planetengetriebeelementen (41;91;101;111;42;92;102;112) feststeht.

3. Vorrichtung nach Anspruch 2, **dadurch gekennzeichnet, dass** das dritte Planetengetriebeelement (47;93;103;113) so aus seinem unbetätigten Zustand schwenkbar ist, dass die ersten beiden Planetengetriebeelemente (41;91;101;111;42;92;102;112) relativ zu dem jeweils zugeordneten Losrad (16,18,20,22;78,80) abgebremst oder beschleunigt werden.

4. Vorrichtung nach einem der Ansprüche 2 oder 3, **dadurch gekennzeichnet, dass** zwischen den ersten beiden Planetengetriebeelementen (111,112) und den zugeordneten Losrädern (78,80) jeweils ein Anschlag (131,133) vorgesehen ist, wobei die beiden Anschläge (131,133) gleiche Wirkrichtungen aufweisen.

5. Vorrichtung nach einem der Ansprüche 2 oder 3, **dadurch gekennzeichnet, dass** eines der ersten beiden Planetengetriebeelemente (111,12) drehfest mit dem zugehörigen Losrad (78,80) verbunden ist.

6. Vorrichtung nach einem der Ansprüche 2 oder 3, **dadurch gekennzeichnet, dass** die ersten beiden Planetengetriebeelemente (111,12) so miteinander gekoppelt sind, dass eine Verdrehung relativ zu den Losrädern (78,80) nur gleichzeitig erfolgen kann.

7. Vorrichtung nach einem der vorhergehenden Ansprüche, **dadurch gekennzeichnet, dass** das Planetengetriebe (1;71) koaxial zu der Getriebewelle (8,7;72) angeordnet ist.

## Claims

1. A device for coupling, shifting and/or synchronizing in a transmission (1; 71) having gear pairs (11-14; 75, 76), which, to represent gears in the transmission (1; 71), each comprise a fixed gear (15, 17, 19, 21; 77, 79) and an idler gear (16, 18, 20, 22; 78, 80) which is rotatably arranged on a transmission shaft (8, 7; 72), and having a coupling device (30; 38; 81), which comprises a planetary transmission (40, 60; 90; 100; 110), which is assigned two idler gears (16, 18, 20, 22; 78, 80) of the transmission (1; 71) adjacent to a transmission shaft (8, 7; 72), **characterized in that** the planetary transmission (40, 60; 90; 100; 110) comprises two planetary transmission elements (41, 42; 91, 92; 101, 102; 111, 112), which are coupled to the idler gears (16, 18, 20, 22; 78, 80) so that a first planetary transmission element (41; 91; 101; 111)/second planetary transmission element (42; 92; 102; 112) rotates substantially synchronously with a first idler gear (16; 78)/second idler gear (18; 80) and the first two planetary transmission elements (41; 91; 101; 111; 42; 92; 102; 112) are coupled to the associated idler gears (16, 18, 20, 22; 78, 80) in such a way that relative speeds between the first two planetary transmission elements (41; 91; 101; 111; 42; 92; 102; 112) and the assigned idler gears (16, 18, 20, 22; 78, 80) trigger a coupling process or synchronization process and effect the engagement of a gear in the transmission (8, 7; 72).

2. The device according to claim 1, **characterized in that** the planetary transmission (40, 60; 90; 100; 110) comprises a third planetary transmission element (47; 93; 103; 113), which is fixed to the first two planetary transmission elements (41; 91; 101; 111; 42; 92; 102; 112) when the coupling device (30; 38; 81) is in a non-actuated state.

3. The device according to claim 2, **characterized in that** the third planetary transmission element (47; 93; 103; 113) can be pivoted from its non-actuated state in such a way that the first two planetary transmission elements (41; 91; 101; 111; 42; 92; 102; 112) are slowed down or accelerated relative to the respectively assigned idler gear (16, 18, 20, 22; 78, 80).

4. The device according to one of claims 2 or 3, **characterized in that** a limit stop (131, 133) is provided between the first two planetary transmission elements (111, 112) and the associated idler gears (78, 80), wherein the two limit stops (131, 133) have the same effective directions.

5. The device according to one of claims 2 or 3, **characterized in that** one of the first two planetary transmission elements (111, 12) is non-rotatably connected to the associated idler gear (78, 80).

6. The device according to one of claims 2 or 3, **characterized in that** the first two planetary transmission elements (111, 12) are coupled to one another in such a way that rotation relative to the idler gears (78, 80) can only occur simultaneously.

7. The device according to one of the preceding claims, **characterized in that** the planetary transmission (1; 71) is arranged coaxially to the transmission shaft (8, 7; 72).

## Revendications

1. Dispositif d'embrayage, de changement de vitesse et/ou de synchronisation dans une transmission (1; 71) comportant des paires de roues (11-14; 75, 76), lesquelles, pour représenter les rapports dans la transmission (1 ; 71), comportent respectivement une roue fixe (15, 17, 19, 21 ; 77, 79) et une roue folle (16, 18, 20, 22 ; 78, 80), cette dernière étant disposée de manière rotative sur un arbre de transmission (8, 7 ; 72), et comportant un dispositif d'embrayage (30 ; 38 ; 81), lequel comprend un train épicycloïdal (40, 60 ; 90 ; 100 ; 110), lequel est affecté à deux roues folles (16, 18, 20, 22; 78, 80) de la transmission (1; 71) adjacentes sur l'arbre de transmission (8, 7, 72), **caractérisé en ce que** le train épicycloïdal (40, 60 ; 90 ; 100 ; 110) comprend deux éléments de train épicycloïdal (41, 42 ; 91, 92 ; 101, 102 ; 111, 112), lesquels sont accouplés aux roues folles (16, 18, 20, 22; 78, 80) de telle sorte qu'un premier élément du train épicycloïdal (41 ; 91 ; 101 ; 111) / deuxième élément du train épicycloïdal (42; 92; 102; 112) tourne essentiellement de manière synchrone avec la première roue folle (16 ; 78) / seconde roue folle (18 ; 80) et les deux premiers éléments du train épicycloïdal (41 ; 91 ; 101 ; 111 ; 42 ; 92 ; 102 ; 112) sont accouplés aux roues folles (16, 18, 20, 22 ; 78, 80) affectés de telle sorte que les vitesses relatives entre les deux premiers éléments du train épicycloïdal (41 ; 91 ; 101 ; 111 ; 42 ; 92 ; 102 ; 112) et les roues folles (16, 18, 20, 22 ; 78, 80) affectées déclenchent un processus d'embrayage ou un processus de synchronisation et provoquent l'engagement d'un rapport dans la transmission (8, 7 ; 72).

2. Dispositif selon la revendication 1, **caractérisé en ce que** le train épicycloïdal (40, 60 ; 90 ; 100 ; 110) comprend un troisième élément du train épicycloïdal (47 ; 93 ; 103 ; 113), lequel, dans un état non actionné du dispositif d'embrayage (30 ; 38 ; 81), est fixe par rapport aux deux premiers éléments du train épicycloïdal (41 ; 91 ; 101 ; 111 ; 42 ; 92 ; 102 ; 112).

3. Dispositif selon la revendication 2, **caractérisé en ce que** le troisième élément du train épicycloïdal (47 ; 93 ; 103 ; 113) peut pivoter depuis son état non actionné de telle sorte que les deux premiers éléments du train épicycloïdal (41 ; 91 ; 101 ; 111 ; 42 ; 92 ; 102 ; 112) sont décélérés ou accélérés par rapport à la roue folle (16, 18, 20, 22 ; 78, 80) respectivement affectée.

4. Dispositif selon l'une quelconque des revendications 2 ou 3, **caractérisé en ce qu'**une butée (131, 133) est respectivement située entre les deux premiers éléments du train épicycloïdal (111, 112) et les roues folles (78, 80) affectées, les deux butées (131, 133) présentant les mêmes directions d'action.

5. Dispositif selon l'une quelconque des revendications 2 ou 3, **caractérisé en ce que** l'un des deux premiers éléments du train épicycloïdal (111, 12) est lié de manière fixe en rotation à la roue folle (78, 80) affectée.

6. Dispositif selon l'une quelconque des revendications 2 ou 3, **caractérisé en ce que** les deux premiers éléments du train épicycloïdal (111, 12) sont accouplés l'un à l'autre de telle sorte que la rotation par rapport aux roues folles (78, 80) ne peut avoir lieu que simultanément.

7. Dispositif selon l'une quelconque des revendications précédentes, **caractérisé en ce que** le train épicycloïdal (1 ; 71) est disposé de manière coaxiale par rapport à l'arbre de transmission (8, 7 ; 72).
